(19) Europäisches Patentamt
European Patent Office
Office européen des brevets

(11) **EP 3 513 074 B1**

(12) **EUROPEAN PATENT SPECIFICATION**

(45) Date of publication and mention
of the grant of the patent:
**02.08.2023  Bulletin 2023/31**

(21) Application number: **17849752.5**

(22) Date of filing: **12.09.2017**

(51) International Patent Classification (IPC):
**F04B 49/00** *(2006.01)*

(52) Cooperative Patent Classification (CPC):
**F04B 49/065; F04B 17/03; F04B 49/02;
F04D 15/00;** F04B 2207/04

(86) International application number:
**PCT/US2017/051085**

(87) International publication number:
**WO 2018/049369 (15.03.2018 Gazette 2018/11)**

(54) **AUTOMATIC SELF-DRIVING PUMPS**

AUTOMATISCHE SELBSTFAHRENDE PUMPEN

POMPES À AUTO-ENTRAÎNEMENT AUTOMATIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.09.2016  US 201662393312 P**

(43) Date of publication of application:
**24.07.2019  Bulletin 2019/30**

(73) Proprietor: **Fluid Handling LLC.
Morton Grove, IL 60053 (US)**

(72) Inventors:
  • **CHENG, Andrew A
    Wilmette, Illinois 60091 (US)**
  • **JOHNSON, Christopher S.
    Gurnee, Illinois 60031 (US)**
  • **GU, James J.
    Buffalo Grove, Illinois 60089 (US)**
  • **SCHOENHEIT, Kyle
    Waterloo, New York 13165 (US)**

(74) Representative: **Wörz, Volker Alfred
Wörz Patentanwälte PartG mbB
Gablenberger Hauptstraße 32
70186 Stuttgart (DE)**

(56) References cited:
  **WO-A1-00/57063        WO-A1-2016/106227
  WO-A1-2016/106227    CA-A1- 2 950 605
  US-A1- 2001 041 139   US-A1- 2014 091 153
  US-A1- 2014 091 153   US-A1- 2014 249 682
  US-A1- 2015 032 271   US-A1- 2016 010 639
  US-A1- 2016 017 889   US-B2- 8 024 161**

**Description**

CROSS REFERENCE TO RELATED APPLICATION

This application claims benefit to U.S. provisional application no. 62/393,312, filed 12 September 2016.

BACKGROUND OF THE INVENTION

1. Field of the Invention

The present invention relates to a technique for controlling a pump; and more particularly relates to a technique for controlling a pump in a system of pumps.

2. Brief Description of Related Art

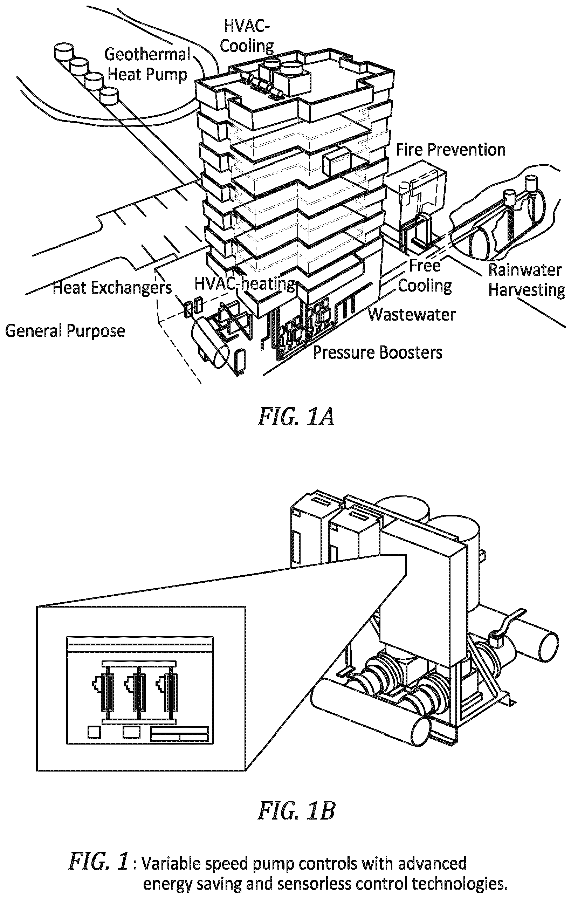

Recently, variable speed pump controls with advanced real time graphic pumping operation display, energy saving and sensorless control technologies [see reference nos. 1-11 summarized and incorporated by reference below] set forth for heating and cooling close loop hydronic applications, pressure booster, industrial and agriculture applications, e.g., as shown in Fig. 1. With those new techniques introduced, some pump system operation parameters or characteristics curves traditionally unknown, such as vary system characteristics curves, adaptive control set point, pressure or flow rate (without sensors), and so forth, may become known and presentable to engineers and operators for understanding better the pump/system/control operation status in real time and make the pumping control set up and run easier.
Certain procedures and experiences are still needed, however, to setup and to run a pump upon an unknown hydronic system properly. It is still a tedious task even with a quick start screen to set up and run a hydronic pumping system.
Therefore, there is a need in the industry for an automatic self-driving pumping system, including setup and run automatically on an unknown hydronic system and a drive, e.g., similar to the concept as in an automatic self-driving car in car making industries.
The document WO 00/57063 discloses a pump control system which controller receives parameters containing the pressure and flow characteristics.

SUMMARY OF THE INVENTION

In summary, the present invention provides an automatic self-driving pump (ASD-pump) technique for automatic pump control design, setup and run. ASD-pump control may consist of control modules with automatic pumps/motor/drives parameter detection and configuration, automatic system and flow detection and recognition, automatic pump control design, setup and self-driving, and a data transmitter for sensors and drives signals through a communication protocol. Hence, an ASD-pump is a pump integrated with a remote or locally attached pumping control which has automatic pump control design, setup and self-driving capabilities with any unknown hydronic system. With an ASD-pump, the pumping control design, setup and operation will be significantly changed and will be a new featured model in pump manufacturing industries.
Moreover, the present invention builds on this family of technologies disclosed in the aforementioned related applications identified herein.

Specific Embodiments

According to some embodiments, the present invention may include, or take the form of, an automatic self-driving pump system, comprising:

a pump/motor/drive detector configured to receive sensed signaling containing information about a pump or drive for operating in a hydronic pump system, e.g., stored in and sensed from a signature chip or barcode installed that can be scanned by a scanner, and provide corresponding database signaling containing information about parameters for providing automatic pump control design, setup and run to control the pump or drive for operating in the hydronic pump system, based upon the sensed signaling received; and

an automatic self-driving and control design/setup module configured to receive the corresponding database signaling, and provide control signaling containing information for providing the automatic pump control design, setup and run to control the pump or drive for operating in the hydronic pump system, based upon the corresponding database signaling received.

According to some embodiments, the present invention may include one or more of the following features: The pump/motor/drive detector may be configured to

receive the sensed signaling, and provide corresponding signaling requesting parameters for providing the automatic pump control design, setup and run to control the pump or drive; and

receive database signaling containing information about the parameters for providing the automatic pump control design, setup and run to control the pump or drive, and provide the corresponding database signaling.

The pump/motor/drive detector may be configured to receive the sensed signaling from a data transmitter, including where the automatic self-driving pump system includes the data transmitter.

The automatic self-driving and control design/setup module may include:

an automatic control design/setup module configured to receive the corresponding database signaling, and provide automatic control design/setup signaling containing information for providing an automatic control design/setup; and

an automatic self-driving module configured to receive the automatic control design/setup signaling, and provide the control signaling containing information for providing the automatic pump control design, setup and run to control the pump or drive.

The automatic self-driving pump system may include a pump/motor/drive database configured to receive the sensed signaling and provide the corresponding database signaling.

The pump/motor/drive database may include an iCloud or iCloud-based database.

According to some embodiments, the present invention may also take the form of a method including steps for:

receiving in a pump/motor/drive detector sensed signaling containing information about a pump or drive for operating in a hydronic pump system, e.g., stored in and sensed from a signature chip or barcode installed that can be scanned by a scanner, and providing corresponding database signaling containing information about parameters for providing automatic pump control design, setup and run to control the pump or drive for operating in the hydronic pump system, based upon the sensed signaling received; and

receiving in an automatic self-driving and control design/setup module the corresponding database signaling, and providing control signaling containing information for providing the automatic pump control design, setup and run to control the pump or drive for operating in the hydronic pump system, based upon the corresponding database signaling received. The method may also include one or more of the features set forth herein, e.g., consistent with that set forth herein.

In effect, the present invention provides a solution to the need in the industry for an automatic self-driving pumping system, including setup and run automatically on an unknown hydronic system and a drive, e.g., similar to the concept as in an automatic self-driving car in car making industries.

Moreover, the present invention provides a new technique that is a further development of, and builds upon, the aforementioned family of technologies set forth below.

BRIEF DESCRIPTION OF THE DRAWING

The drawing includes the following Figures 1 -5, which are not necessarily drawn to scale:

Figure 1 includes Figs 1 A and 1 B, showing in Fig. 1 A a diagram of a building, structure or facility having one or more of HVAC heating and cooling, heat exchangers, pressure boosters, rainwater harvesting, geothermal heat pumps, fire protection, wastewater, etc., e.g., that may also include pumps having variable speed controls with advanced energy savings and sensorless control technology for controlling pumping processes shown in Fig. 1 B.

Figure 2 includes Figs. 2A and 2B, showing ASD-pumps integrated with a pumping control configured remotely in Fig. 2A and locally attached in Fig. 2B, according to some embodiments of the present invention.

Figure 3 shows ASD-pumps functional model, according to some embodiments of the present invention.

Figure 4 shows photos of an ASD-pump prototype with a touch screen pumping control system, according to some embodiments of the present invention.

Figure 5 is a block diagram of a controller having a signal processor or processing module configured therein for implementing signal processing functionality for one or more modules, according to some embodiments of the present invention.

It is noted that arrows included in drawing are porovided by way of example, and are not intended to be strictly constued and limiting. For example, a two-way arrow may be interpreted to represent a primary function having two-way communcations, while a one-way arrow may be interpreted to represent a primary function having one-way communcations. However, as one skilled in the art would appreciate, any one-way arrow does not, and is not intended to, preclude a signaling communication exchange in the other direction, e.g., that may form part of the primary function, or as part of a secondary function like a handshaking operation between any two such modules or devices.

DETAILED DESCRIPTION OF THE INVENTION

1. Introduction

In summary, the present invention provides an automatic self-driving pump (ASD-pump) technique for automatic pump control design, setup and run. By way of example, the ASD-pump control may include control modules with automatic pumps/motor/drives parameter detection and configuration, automatic system and flow detection and recognition, automatic pump control design, setup and self-driving, and a data transmitter for sensors and drives signals through a communication protocol. Hence, an ASD-pump may include a pump integrated with a remote or locally attached pumping control which has automatic pump control design, setup and self-driving capabilities with any unknown hydronic system. With an ASD-pump, the pumping control design, setup and operation will be significantly changed and will be a new featured model in pump manufacturing industries.

2. Automatic Self-Driving Pumps

ASD-pumps configuration:

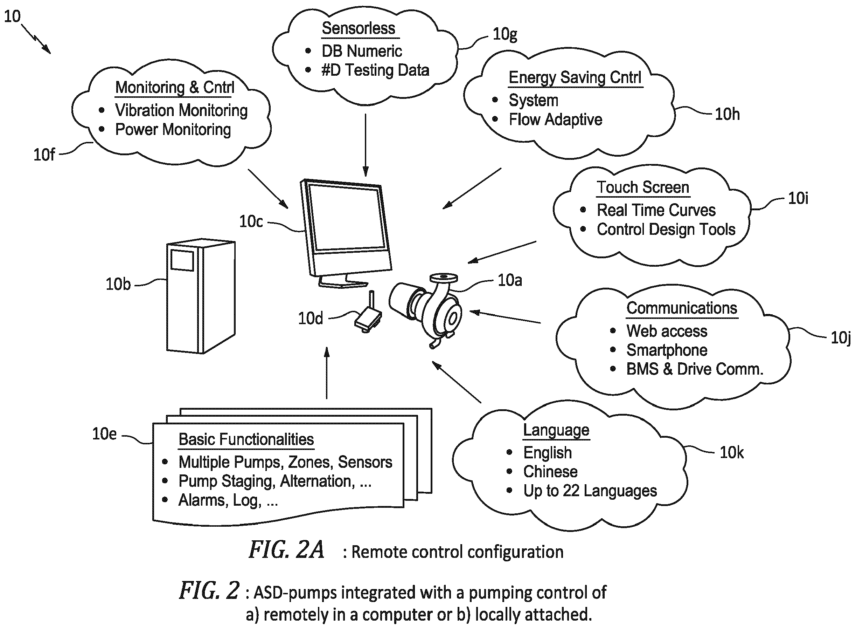

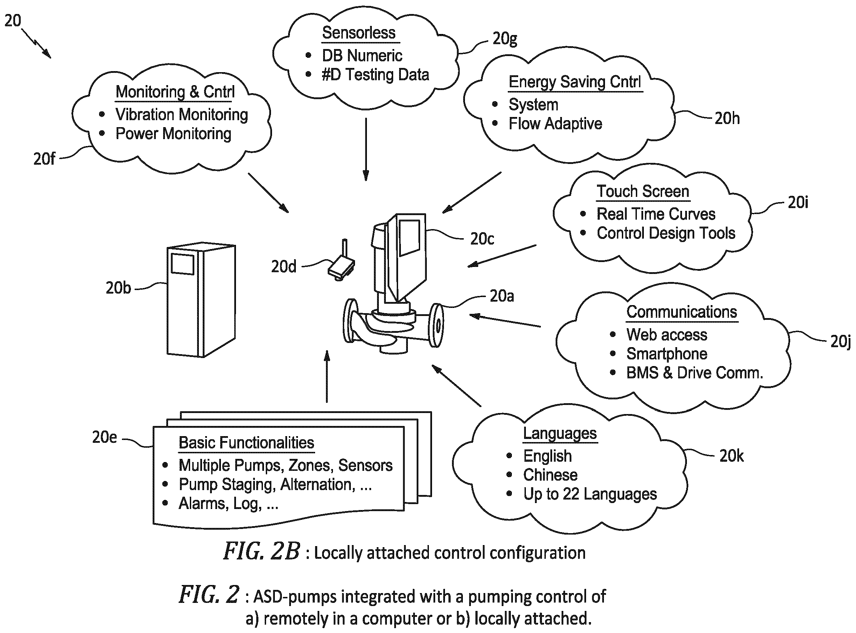

The ASD-pumps configuration may include the following:
An automatic self-driving pump (hereinafter "ASD-pump") is an integrated pumping control system generally indicated as 10, which is designed, setup and run automatically on an unknown hydronic system with energy saving, sensorless as well as some other advanced features as shown in Fig. 2. The ASD-pump consists of a pump 10a integrated with a pumping control for (a) remotely (Fig. 2A) using a computer 10b, 10c or (b) a locally (Fig. 2B) attached control configuration using a touch screen monitor 20c, a data transmitter 10d, 20d for converting sensors signals to a pumping control through a communication protocol, and a VFD drive, respectively.
By way of example, the basic control functionality 10e, 20e provide may include controlling and coordinating multiple pumps, zones and sensors, pump staging, alarms, log, etc.; the monitoring and control functionality 10f, 20f may include vibration and power monitoring; the sensorless functionality 10g, 20g may include DB numeric and 3D testing data; the functionality for energy saving control 10h, 20h may include system and adaptive control; the functionality for touch screen 10i, 20i may include real time curves and control design tools; the functionality for communication 10j, 20j may include web access, smartphone BMS and drive communications; and the functionality for language 10h, 20h may include British, Chinese and numerous other languages, e.g., consistent with the functionality shown in Figures 2A and 2B.

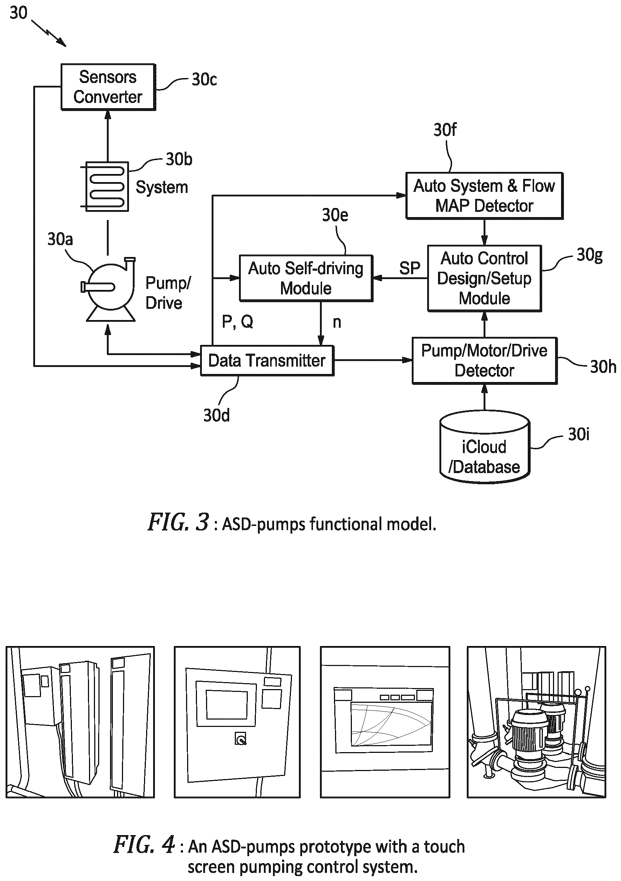

Figure 3 shows an ASD-pump concept and functional model generally indicated 30, e.g., which may consist of a pump or drive 30a, a system 30b, a Sensors converter 30c, a Data Transmitter 30d, an Automatic Self-driving Module 30e, an Automatic System and Flow MAP Detector 30f, an Automatic Control Design/Setup Module 30g, an Automatic Pump/Motor/Drive Detector 30h, and a pump/motor/drives database or iCloud 30i.
Here, the Automatic Pump/Motor/Drive Detector 30h may be used for pumps, motors and drives selection and configuration automatically, based upon their signature chip or barcode installed which can be scanned into the pump control system automatically by a scanner once installed. By way of example, their parameters (e.g., including power, voltage, phase, RPM, impeller size, pump curves data, and so on) can be searched and configured automatically from the pump/motor/drive database or iCloud 30i by the Automatic Pump/Motor/Drive Detector 30h, based upon their signatures. By way of example, and consistent with that shown in Figure 3, in operation the Automatic Pump/Motor/Drive Detector 30h receives associated signaling containing information for performing or implementing its Automatic Pump/Motor/Drive Detector signal processing functionality associated with the module 30g, determines corresponding signaling SP containing information for providing from the module 30g in order to implement the Automatic Pump/Motor/Drive Detector signal processing functionality, based upon the signaling received; and provides the corresponding signaling SP from the module 30g to the auto self-driving module 30e, as shown, in the automatic self-driving pump system.

The Auto System & Flow MAP Detector 30f may be used for obtaining moving average peak (MAP) of an unknown system as well as the flow rate in the system 30b. The Auto System & Flow MAP Detector 30f may be applicable not only for a static hydronic system, but also for a variable system as well. For instance, a MAP for Automatic System & Flow MAP Detector 30f may be defined as following

$$\bar{C}_{vmax}(t) = \begin{cases} MAP(C_v(t)), & C_v < \bar{C}_{vmax} \\ C_v(t), & C_v \geq \bar{C}_{vmax} \end{cases} \quad (1.1)$$

$$\bar{Q}_{max}(t) = \begin{cases} MAP(Q(t)), & < \bar{Q}_{max} \\ Q(t), & \geq \bar{Q}_{max} \end{cases} \quad (1.2)$$

where *MAP* is the moving average peak detector, $C_v$ is a system dynamic friction coefficient which can be derived by system flow equation of

$$C_v = Q/\sqrt{\Delta P},$$

where $\Delta P$ is differential pressure of pump, $\bar{C}_{vmax}$ represents the *MAP* of $C_v$.

Since it is a moving average peak detector up on the system coefficient and flow rate, the $\overline{C}_{max}$ and $\overline{Q}_{max}$ obtained through *MAP* from Eq. (1) are adaptive to system and flow rate changes depending upon the sampling time and filter length in moving average digital filters. All those parameters are derived or set up automatically after the ASD-pump is started initially.

The Auto Control Design/Setup Module 30g may be used to configure the adaptive control curve and real time graphic pump characteristics curves and operation parameters accordingly and automatically. The adaptive control equation for deriving an adaptive pressure set point of *SP(t)* may be defined as following:

$$SP(t) = \left(\frac{Q(t)}{Q_{max}(t)}\right)^{\alpha} ((\bar{Q}_{max}(t)/\bar{C}_{vmax}(t))^2 - b_0) + b_0 \quad (2)$$

where $b_0$ is the minimum pressure at no flow, $\alpha$ is a control curve setting parameter varying as $1 \leq \alpha \leq 2$ defined in between a linear curve and a quadratic one. All the parameters in Eq. 2 are set up automatically after the ASD-pump is started initially.

According to the invention and consistent with that shown in Figure 3, in operation the Auto System & Flow MAP Detector 30f receives data transmitter signaling P, Q from the data transmitter 30d, e.g., containing information for performing or implementing its Auto System & Flow MAP Detector signal processing functionality associated with the module 30f, determines corresponding signaling containing information for providing from the module 30f in order to implement the Auto System & Flow MAP Detector signal processing functionality, based upon the signaling received; and provides the corresponding signaling to the auto control design/setup module 30g, as shown, in the automatic self-driving pump system.

The Auto Self-Driving Module 30e may then be used to derive the desired pump speed of *n*, which is obtained by a PID pump control function with respect to the adaptive pressure set point of SP and the instant pressure value from a pressure transducer or a sensorless converter.

The data transmitter 30d attached to the ASD-pump is used mainly for transmitting the sensors and drive signals for a pumping control remotely in the computer through a communication protocol or locally attached on the ASD-pump.

Here, the sensors signals transmitted by the data transmitter 30d may include control signals, such as flow, pressure, temperature, and so on, and condition monitoring signals, such as vibration, power, or thermal as well. The drive signals may include all those digital and analog input/output (IO) signals for providing drive/pump control.

All those signals mentioned above can be transmitted to the pump control directly without routing through the data transmitter 30d, if the drive may provide sufficient analog input terminals.

According to the invention and consistent with that shown in Figure 3, in operation the data transmitter 30d receives associated signaling containing information for performing or implementing its data transmitter signal processing functionality associated with the module 30d, determines corresponding signaling (e.g. , including signaling P, Q) containing information for providing from the module 30d in order to implement the data transmitter signal processing functionality, based upon the signaling received; and provides the corresponding signaling (e.g. , including signaling P, Q) from the module 30d to the auto self-driving module 30e, the pump/motor/drive detector 30h, and the pump or drive 30a, as shown, in the automatic self-driving pump system. By way of further example, the associated signaling received may include sensor converter signaling from the sensor converters 30c, auto self-driving module signaling n from the auto self-driving module 30e, and pump or drive signaling from the pump or drive 30a, as shown. By way of still further example, the corresponding signaling provided may include data transmitter signaling P, Q containing information about the pressure and flow, e.g., provided to the auto self-driving module 30e, as shown, as well as data transmitter signaling provided to the pump or drive 30a and the pump/motor/drive detector 30h, as also shown.

The Sensors converter 30c may be used to convert sensorless signals of system pressure and flow rate. For the sensorless control, the power or one of its equivalent signal such as current or torque may be converted as well. By way of example, and consistent with that shown in Figure 3, in operation the sensors converter 30c receives associated signaling containing information for performing or implementing its sensors converter signal processing functionality associated with the module 30c (e.g., including system signaling from the system 30b), determines corresponding signaling containing information for providing from the module 30c in order to implement the sensors converter signal processing functionality, based upon the systems signaling received; and provides the corresponding signaling from the module 30c to the data transmitter 30d, as shown, in the automatic self-driving pump system.

By way of example, the Pump/motor/drives database or iCloud 30i may contain data for all the pumps, motors and drives, including power, voltage, phase, RPM, impeller size, pump curves, and so on, which can be searched through and configured automatically by the Pump/Motor/Drive Detector 30h.

An ASD-pump is an integrated pump and pumping control system, which can be set up and run automatically on an unknown hydronic system while pump/motor/drive are configurable automatically from the database or iCloud 30i. In the present invention, the model in Fig. 3, including the Auto Self-Driving Module 30e, Auto System & Flow MAP Detector 30f, and Auto Control Design/Setup Module 30g, are the core components for an ASD-pump to run in terms of automatic and self-driving key features, while the Pump/Motor/Drive Detector 30h, the Data transmitter 30d and Sensors converter 30c are fundamental function modules to make those features realized and feasible as well.

ASD-pump setup and run procedures:

The ASD-pump setup and run procedures may include the following:
After an ASD-pump is installed and powered up, the pump control will collect pump, motor and drive data first by the Pump/Motor/Drive Detector 30h, based upon the signature chip or barcode installed and scanned into the pumping control from the database or iCloud 30i automatically.

The ASD-pump may then start to run according to its initial setup control curve based upon the pump data from the Pump/Motor/Drive Detector 30h and instant input signals of flow and pressure through sensors or sensorless converter. The designed duty point of $\overline{C}_{vmax}$ and $\overline{Q}max$ are derived continuously and accordingly by the Auto System & Flow MAP Detector 30f.

The control curve equation may then be defined accordingly based upon the designed duty point of $C_{vmax}$ and $\overline{Q}_{max}$ by the Automatic Control Design/Setup Module 30g. The other parameters in control equation, such as the minimum pressure at no flow, $b_0$, the control curve setting parameter, $\alpha$, may be predefined as a default for automatic self-driving.

The pump may then be running under an Auto Self-Driving Module control, with the desired pump speed of 3/4 which is obtained by a PID pump control function with respect to the adaptive pressure set point of SP and the instant pressure value from a pressure transducer or a sensorless converter.

The ASD-pump is then running automatically and adaptively with respect to system and flow rate changes, since its control equation defined by the design point varies with respect to moving average maximum of system and flow rate in system, with best pumping efficiency and sensorless as well, if selected.

ASD-pumps Basic Features:

The ASD-pumps Basic Features are as follows:

- The ASD-pump is a pump integrated with a pumping control of (a) remotely (Fig. 2A) in a computer or (b) locally attached (Fig. 2B), and the data transmitter 30d to transfer the signals and control data from sensors and VFD drives to the pump control through a communication protocol.

- Hooked up with pre-selected pumps/motors/drives with its signature chip automatically based upon the database or iCloud 30i.

- Hooked up with any unknown hydronic systems, automatically and independently.

- Design, setup and run pumping control automatically.

- Automatic self-driving with flow & system adaptive control on any unknown hydronic systems with energy saving features.

- Sensorless for pumping flow rate and pressure signals for control and monitoring.

- Pump control design toolbox for onsite pumping and control design and setup, if needed.

- Real time graphic display control, pump and system characteristics curves and pumps operation values and status.

- Multiple pumps control capabilities.

- iCloud data storage, monitoring and presentation.

ASD-pumps Prototype

Figure 4 shows an ASD-pumps Prototype, as follows:
In Figure 4, the ASD-pump prototype integrated with locally attached pumping control has automatic pump control design, setup and self-driving capabilities with any unknown hydronic system. Note that the pumping control panel was detached during testing in the pictures shown below.

By utilizing the pump control design toolbox integrated in the touch screen pump controller (e.g., see 20c) of the ASD-pump, the pump control curve is designed, set up and run automatically to meet the system flow and pressure requirement for an unknown hydronic system. The ASD-pump control curve may be designed and setup automatically with respect to the pump, drive and system characteristics curves, in real time on site and flexible for any unknown hydronic system, to achieve the best pumping operation efficiency to save energy. In addition, all the information regarding the pump, system, control operation and their read outs may be displayed graphically and numerically, that makes the pump operation and maintenance much easier as well.

By way of example, and consistent with that set forth herein, the ASD-pump prototype in Figure 4 essentially consists of the Sensors converter 30c, the Data Transmitter 30d, the Automatic Self-driving Module 30e, the Automatic System & Flow MAP Detector 30f, the Automatic Control Design/Setup Module 30g, the Automatic Pump/Motor/Drive Detector 30h, and a pump/motor/drives database or iCloud 30i, e.g., consistent with that shown in Figure 3.

Here, the Pump/Motor/Drive Detector 30h may be used for pumps, motors and drives selection and configuration automatically, based upon their signature chip or barcode installed. The Auto System & Flow MAP Detector 30f may be used for obtaining moving average peak (MAP) of an unknown system as well as the flow rate in system. The Auto Control Design/Setup Module 30g may be used to configure the adaptive control curve and real time graphic pump characteristics curves and operation parameters accordingly and automatically. The Auto Self-Driving Module 30e may be used to derive the adaptive pressure set point, the instant pump speed by a PID control with respect to the adaptive pressure set point derived and the instant pressure value from a pressure transducer or a sensorless converter, and to run ASD-pump at the speed, accordingly.

The data transmitter 30d attached to an ASD-pump like element 30a is used for transmitting and receiving the sensors and drive signals from the pumping control.

Consistent with that set forth above, the ASD-pump prototype shown in Figure 4 is an integrated pump and pumping control system which can be designed, set up and run automatically on any unknown hydronic systems, with pump/motor/drive parameters and data in the control configurable automatically from the database based upon their signature chip. In the present invention in Fig. 4, the Auto System & Flow MAP Detector 30f, Auto Control Design/Setup Module 30g and Auto Self-Driving Module 30e are the core components for the ASD-pump to run in terms of automatic and self-driving key features, while the Pump/Motor/Drive Detector 30h, the Data transmitter 30d and Sensors converter 30d are fundamental function modules to make those features feasible as well.

An energy saving module regarding outdoor temperature variation as well as day and night temperature scheduling functional module may be integrated into the pump control design toolbox in the ASD-pumps control to save pumping operation energy in the consideration with those environmental circumstances as well.

With a hydronic system recognition module and a moving flow peak detector integrated with system and flow adaptive control, an automatic pump control design, setup and run functionalities may be realized by deriving the desired pump design point as well as pressure set point automatically. For that, with one push button of "Auto Cntl" in the pump design toolbox, the pump control can be designed, setup and run automatically for a known or unknown hydronic system with the minimized pumping energy consumption.

Flow and pressure signals for the pumping control for ASD-pumps may be provided by a sensorless converter or by sensors as well, to obtain the real time pump, system and control characteristics curves accordingly.

Lastly, the graphic touch screen display (e.g., 20c (Fig. 2B) in the pump control design toolbox for ASD-pumps will be one of the best candidates recommended for deriving the design point and for displaying the curves and operation data as well. Some low cost PLDs or even PC boards may, however, be feasible for a pump control design toolbox as well for ASD-pumps.

In summary, according to some embodiments of the present invention an ASD-pump can be designed, set up and run automatically with any kinds of drives, high-end or low end, and so forth, and run on any unknown static or variable systems. ASD-pump's pumping controls software can be configured in a remote computer through a communication protocol optimally, or a locally attached PID pumping controller. All the information of power consumption, flow rate and pressure for the control and monitoring signals needed are obtained with a sensorless converter or with sensors. A data transmitter is used to convert and/or transmit all sensors signals from pumps and drives to the pump controller through the communication protocols. The transmitter may be integrated with the pump directly or is embedded as a coprocessor in a drive as well.

Summary of Embodiments/Implementations

According to some embodiments, the present invention may include, or take the form of, implementations where the ASD-pump technique includes primarily a pump integrated with a remote or locally attached pumping control which has automatic pump control design, setup and self-driving capabilities for any unknown hydronic system, a drive, sensors or a sensorless converter, and a data transmitter. An automatic self-driving pump (ASD-pump) is an integrated pumping control system, which is designed, setup and run automatically on an unknown hydronic system with energy saving, sensorless as well as some other advanced features as shown in Fig. 2. The ASD-pump consists of a pump integrated with a pumping control of (a) remotely in a computer or (b) locally attached, a data transmitter for converting sensors signals to pumping control through a communication protocol, and a VFD drive, respectively.

According to some embodiments, the present invention may include, or take the form of, implementations where the pump control in ASD-pumps technique includes the Automatic Pump/Motor/Drive Detector 30h, Automatic System & Flow MAP Detector 30f, Automatic Control Design/Setup Module 30g, the Automatic Self- driving Module 30e, Data Transmitter 30d, Sensors converter 30c, the pump/motor/drives database or iCloud 30i, and a drive firmware module, as shown and described in relation to Figs. 2 and 3.

According to some embodiments, the present invention may include, or take the form of, implementations where the Pump/Motor/Drive Detector 30h includes a search algorithm for pumps, motors and drives selection and configuration automatically, based upon their signature chip or barcode installed which can be scanned into pump control system automatically by a scanner once installed. Their parameters including power, voltage, phase, RPM, impeller size, pump curves data, and so on, can be searched and configured automatically from the pump/motor/drive database or iCloud 30i by the Pump/Motor/Drive detector 30h, based upon their signatures.

According to some embodiments, the present invention may include, or take the form of, implementations where the Auto System & Flow MAP Detector 30f in pump control in ASD-pumps technique includes a control module for obtaining moving average peak (MAP) of an unknown system as well as the flow rate in system defined in Eq. (1). The Auto System & Flow MAP Detector 30f may be applicable not only for a static hydronic system, but also a variable system as well. Since it is a moving average peak detector up on system coefficient and flow rate, the $\overline{C}_{vmax}$ and $\overline{Q}_{max}$ obtained through MAP from Eq. (1) are adaptive to system and flow rate changes depending upon the sampling time and filter length in moving average digital filters. All those parameters are derived or set up automatically after ASD-pump is started initially.

According to some embodiments, the present invention may include, or take the form of, implementations where the Auto Control Design/Setup Module 30g in pump control in ASD-pumps technique includes a control module which is used for deriving an adaptive pressure set point in Eq. (2). All other parameters in Eq. (2) are set up automatically after ASD-pump is started.

According to some embodiments, the present invention may include, or take the form of, implementations where the Auto Self-Driving Module 30e in pump control in ASD-pumps technique includes a control module which is to derive the pump speed of $n$ by a PID pump control with respect to the adaptive pressure set point of SP and the instant pressure value from a pressure transducer or a sensorless converter.

According to some embodiments, the present invention may include, or take the form of, implementations where the data transmitter includes the data transmitter 30d used mainly for transmitting the sensors and drive signals for a pumping control through a communication protocol. Here, the sensors signals transmitted by the data transmitter 30d may include control signals, such as flow, pressure, temperature, and so on, and condition monitoring signals, such as vibration, power, or thermal as well. The drive signals may include all those digital and analog input/output (IO) signals for drive/pump control. All those signals mentioned above can be transmitted to pump control directly without routing through the data transmitter 30d, if the drive may provide sufficient analog input terminals.

According to some embodiments, the present invention may include, or take the form of, implementations where the sensor(s) converter includes a sensors converter 30c used to convert sensorless signals of system pressure and flow rate. For the sensorless control, the power or one of its equivalent signal such as current or torque may be converted as well.

According to some embodiments, the present invention may include, or take the form of, implementations where the Pump/motor/drives database includes a database or iCloud 30i which contains all the pumps, motors and drives data including power, voltage, phase, RPM, impeller size, pump curves, power curves, and so on, which can be searched through and configured automatically by the Pump/Motor/Drive Detector 30h.

According to some embodiments, the present invention may include, or take the form of, implementations where the ASD-pumps technique include an energy saving module for outdoor temperature variation as well as day and night temperature scheduling functional module, which may be integrated into the pump control design toolbox in the ASD-pumps control to save pumping operation energy with the consideration of environmental circumstances as well.

According to some embodiments, the present invention may include, or take the form of, implementations where the flow and pressure signals for the energy saving control for ASD-pumps technique are provided by either a sensorless converter, or by sensors as well, in order to obtain the real time pump, system and control characteristics curves displayed in screen.

According to some embodiments, the present invention may include, or take the form of, implementations where the ASD-pumps technique includes the graphic touch screen display in the pump control design toolbox for selecting automatically the design point and for displaying the curves and operation data as well. Some low cost PLDs or even pc boards may, however, be feasible as well for a pump control design toolbox for ASD-pumps.

According to some embodiments, the present invention may include, or take the form of, implementations where the pumping hydronic system includes all close loop or open loop hydronic pumping systems, such as primary pumping systems, secondary pumping systems, water circulating systems, and pressure booster systems. The systems mentioned here may consist of a single zone or multiple zones as well.

According to some embodiments, the present invention may include, or take the form of, implementations where the hydronic signals derived by sensors or a sensorless converter include pump differential pressure, system pressure or zone pressure, system or zone flow rates, and so forth.

According to some embodiments, the present invention may include, or take the form of, implementations where the control signals transmitting and wiring technologies mentioned here include all conventional sensing and transmitting techniques that are used currently. Preferably, wireless sensor signal transmission technologies would be optimal and favorable.

According to some embodiments, the present invention may include, or take the form of, implementations where the pumps for the hydronic pumping systems includes a single pump, a circulator, a group of parallel ganged pumps or circulators, a group of serial ganged pumps or circulators, or their combinations.

The Family of Related Technologies

This disclosure is related to a family of disclosures, e.g., including:

Reference [1]: by Andrew Cheng and James Gu, entitled "Method and Apparatus for Pump Control Using Varying Equivalent System Characteristic Curve, a/k/a an Adaptive Control Curve," having application serial no. 12/982,286, and issuing as US Patent No. 8,700,221.
Reference [2]: by Andrew Cheng, James Gu and Graham Scott, entitled "Dynamic Linear Control Methods And Apparatus For Variable Speed Pump Control," having patent application No. 13/717,086 (US 2014/ 0 005 841 A1), filed 17 December 2012, claiming benefit to provisional application no. 61 /576,737, filed on December 16, 2011.

Reference [3]: by Andrew Cheng, James Gu, Graham Scott, entitled "3D Sensorless Conversion Means and Apparatus for Pumping System Pressure and Flow," having patent application no. 14/091,795 (US 2014/ 0 249 682 A1), filed on 27 November 2013, claiming benefit to provisional patent application no. 61/771,375, filed 1 March 2013.

Reference [4]: by Andrew Cheng, James Gu and Graham Scott, entitled "A Mixed Theoretical and Discrete Sensorless Converter for Pump Differential Pressure and Flow Monitoring," having application no. 14/187,817 (US 2014/ 0 288 716 A1), claiming benefit to provisional patent application no. 61/803,258, filed 19 March 2013.

Reference [5]: by Andrew Cheng, James Gu and Graham Scott, entitled "Sensorless Adaptive Pump Control with Self-Calibration Apparatus for Hydronic Pumping Systems" having application no. 14/339,594 (US 2015/ 0 032 271 A1), filed 24 July 2014, claiming benefit to the provisional application no. 61/858,237, filed on July 25, 2013.

Reference [6]: by Andrew Cheng, James Gu and Graham Scott, entitled "Best-Fit Affinity Sensorless Conversion Means Or Technique For Pump Differential Pressure And Flow Monitoring," having application no. 14/680,667 (US 2016/ 0 010 639 A1), filed on 7 April 2015, claiming benefit to the provisional application no. 61/976,749, filed on April 08, 2014.

Reference [7]: by Andrew Cheng, James Gu and Graham Scott, entitled "System and Flow Adaptive Pumping Control Apparatus - A Minimum Pumping Energy Operation Control System vs. Sensorless Application," having application no. 14/730,871 (US 2016/ 0 017 889 A1); claiming benefit to provisional application no. 62/007,474, filed 4 June 2014.

Reference [8]: by Andrew Cheng and James Gu, entitled "A Discrete Valves Flow Rate Converter Device," having application no. 14/969,723 (US 2016/ 0 186 889 A1), filed 15 December 2015, claiming benefit to provisional application no. 62/091,965, filed on 15 December 2014.

Reference [9]: by Andrew Cheng and James Gu, entitled "No Flow Detection Means for Sensorless Pumping Control Applications," having application no. 15/044,670 (US 2016/ 0 246 290 A1), filed 16 February 2016, claiming benefit to Provisional Application no. 62/116,031, filed on 13 February 2015.

Reference [10]: by Andrew Cheng, James Gu and Kyle Schoenheit, entitled "Direct numerical Sensorless conversion apparatus for pumping control," having application no. 15/173,781 (US 2016/ 0 356 276 A1), filed 6 June 2016, claiming benefit to provisional application no. 62/170,977, filed 4 June 2015.

Reference [11]: by Andrew Cheng, James Gu and Kyle Schoenheit, entitled "Advanced Real Time Graphic Sensorless Energy Saving Pump Control System," having serial no. 15/217,070 (US 2017/0 107 992 A1), filed 22 July 2016, claiming benefit to provisional application no. 62/196,355, filed on 24 July 2015; which are all hereby incorporated by reference in their entirety.

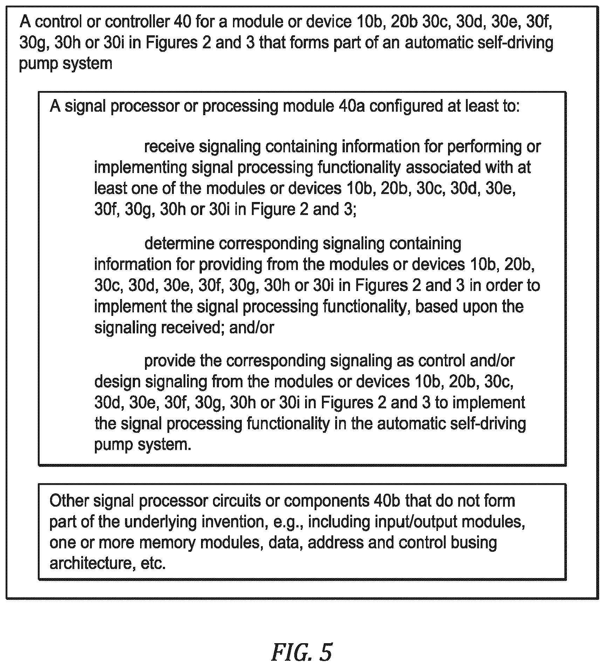

Figure 5: Implementation of Signal Processing Functionality

By way of further example, Figure 6 shows a control or controller 40 for a module or device 10b, 20b 30c, 30d, 30e, 30f, 30g, 30h or 30i in Figures 2 and 3 that forms part of the automatic self-driving pump system. The control or controller 40a includes a signal processor or processing module configured at least to:

receive signaling containing information for performing or implementing signal processing functionality associated with at least one of the modules or devices 10b, 20b, 30c, 30d, 30e, 30f, 30g, 30h or 30i in Figure 2 and 3;

determine corresponding signaling containing information for providing from the modules or devices 10b, 20b, 30c, 30d, 30e, 30f, 30g, 30h or 30i in Figures 2 and 3 in order to implement the signal processing functionality, based upon the signaling received; and/or

provide the corresponding signaling as control and/or signaling from the modules or devices 10b, 20b, 30c, 30d, 30e, 30f, 30g, 30h or 30i in Figures 2 and 3 to implement the signal processing functionality in the automatic self-driving pump system.

In operation, the signal processor or processing module 40a may be configured to provide the corresponding signaling as the control signaling to control a pump or a system of pumps, e.g., as design signaling to configure or design the pump or a system of pumps, e.g., such as a system of pumps in a hydronic pumping system. By way of example, the corresponding signaling may also be used to control the pumping hydronic system.

By way of example, the functionality of the signal processor or processing module 40a may be implemented using hardware, software, firmware, or a combination thereof. In a typical software implementation, the signal processor or processing module 40a would include one or more microprocessor-based architectures having, e. g., at least one signal processor or microprocessor like element. One skilled in the art would be able to program with suitable program code such a microcontroller-based, or microprocessor-based, implementation to perform the functionality described herein without undue experimentation. For example, the signal processor or processing module may be configured, e.g., by one skilled in the art without undue experimentation, to receive the signaling, consistent with that disclosed herein. Moreover, the signal processor or processing module may be configured, e.g., by one skilled in the art without undue experimentation, to determine the corresponding signaling, consistent with that disclosed herein.

The invention is not intended to be limited to any particular implementation using technology either now known or later developed in the future. The invention is intended to include implementing the functionality of the processors as stand-alone processor, signal processor, or signal processor module, as well as separate processor or processor modules, as well as some combination thereof.

The signal processor or processing module 40a may also include, e.g., other signal processor circuits or components 40b, including random access memory or memory module (RAM) and/or read only memory (ROM), input/output devices and control, and data and address buses connecting the same, and/or at least one input processor and at least one output processor, e.g., which would be appreciate by one skilled in the art. By way of example, the signal processor or processing module 40a, 40b may include, or take the form of, at least one signal processor and at least one memory including computer program code, and the at least one memory and computer program code are configured to, with at least one signal processor, to cause the signal processor at least to receive the signaling and determine the corresponding signaling, and the signaling received. The signal processor or processing module may be configured with suitable computer program code in order to implement suitable signal processing algorithms and/or functionality, consistent with that set forth herein. One skilled in the art would appreciate and understand how to implement any such computer program code to perform the signal processing functionality set forth herein without undue experimentation based upon that disclosed in the instant patent application.

Computer Program Product

The present invention may also, e. g., take the form of a computer program product having a computer readable medium with a computer executable code embedded therein for implementing the method, e.g., when run on a signal processing device that forms part of such a pump or valve controller. By way of example, the computer program product may, e. g., take the form of a CD, a floppy disk, a memory stick, a memory card, as well as other types or kind of memory devices that may store such a computer executable code on such a computer readable medium either now known or later developed in the future.

Other Related Applications

The application is related to other patent applications that form part of the overall family of technologies developed by one or more of the inventors herein, and disclosed in the following applications:

U.S. application serial no. 12/982,286 (US 2012/ 0 173 027 A1), filed 30 December 2010, entitled "Method and apparatus for pump control using varying equivalent system characteristic curve, AKA an adaptive control curve," which issued as U.S. Patent No. 8,700,221 on 15 April 2014; and

U.S. application serial no. 13/717,086 (US 2014/ 0 005 841 A1), filed 17 December 2012, entitled "Dynamic linear control methods and apparatus for variable speed pump control," which claims benefit to U.S. provisional application no. 61/576,737, filed 16 December 2011, now abandoned;

U.S. application serial no. 14/680,667 (US 2016/ 0 010 639 A1), filed 7 April 2015, entitled "A Best-fit affinity sensorless conversion means for pump differential pressure and flow monitoring," which claims benefit to provisional patent application serial no. 61/976,749, filed 8 April 2014, now abandoned;

U.S. application serial no. 14/730,871 (US 2016/ 0 017 889 A1), filed 4 June 2015, entitled "System and flow adaptive sensorless pumping control apparatus energy saving pumping applications," which claims benefit to provisional patent application serial no. 62/007,474, filed 4 June 2014, now abandoned; and

U.S. application no. 14/969,723 (US 2016/ 0 186 889 A1), filed 15 December 2015, entitled "Discrete valves flow rate converter," which claims benefit to U.S. provisional application no. 62/091,965, filed 15 December 2014;

U.S. application no. 15/044,670, filed 16 February 2016, entitled "Detection means for sensorless pumping control applications," which claims benefit to U.S. provisional application no. 62/116,031, filed 13 February 2015, entitled "No flow detection means for sensorless pumping control applications;"

which are all assigned to the assignee of the instant patent application, and which are all incorporated by reference in their entirety herein.

The Invention

It should be understood that, unless stated otherwise herein, any of the features, characteristics, alternatives or modifications described regarding a particular embodiment herein may also be applied, used, or incorporated with any other embodiment described herein. Also, the drawing herein is not drawn to scale.

Although the present invention is described by way of example in relation to a centrifugal pump, the invention is intended to include using the same in relation to other types or kinds of pumps either now known or later developed in the future.

Although the invention has been described and illustrated with respect to exemplary embodiments thereof, the foregoing and various other additions and omissions may be made therein and thereto without departing from the present invention.

**Claims**

1. An automatic self-driving pump system, comprising:
a controller (40) having a signal processor (40a) configured to

receive sensed signaling that is obtained with a sensorless converter or with sensors and that contains information about parameters for automatic pump control design, initial setup and run to control a pump drive (30a) for operating in a hydronic pump system (30b), and
provide control signaling that contains information to control the pump drive (30a) for an initial startup configuration and subsequent operation in the hydronic pump system (30b) after the initial startup, based upon the sensed signaling received;
**characterized in that** the controller (40) comprising:

an automatic self-driving module (30e) configured to receive the control signaling and pressure and flow signaling that contains information about the pressure (P) and flow (Q) of the pump drive (30a), and provide automatic self-driving module signaling that contains information to control the pump drive (30a) for the initial startup configuration and subsequent operation in the hydronic pump system (30b) after initial startup; and
an automatic system and flow moving average peak (MAP) detector (30f) configured to

receive the pressure and flow signaling, and
provide automatic system and flow MAP detector signaling based upon a moving average peak (MAP) determined;

the MAP being determined and defined as following:

$$\bar{C}_{vmax}(t) = \begin{cases} MAP(C_v(t)), & C_v < \bar{C}_{vmax} \\ C_v(t), & C_v \geq \bar{C}_{vmax} \end{cases} \qquad (1.1)$$

$$\bar{Q}_{max}(t) = \begin{cases} MAP(Q(t)), & Q < \bar{Q}_{max} \\ Q(t), & Q \geq \bar{Q}_{max} \end{cases} \qquad (1.2)$$

where the MAP function is a moving average peak detector (30f), $C_v$ is a system dynamic friction coefficient derived by a system flow equation of $C_v = Q/\sqrt{\Delta P}$, where $\Delta P$ is differential pressure of pump, $\overline{C}_{vmax}$ represents the MAP of $C_v$.

2. The automatic self-driving pump system according to claim 1, wherein the sensed signaling received includes signature chip or barcode signaling that contains information about the pump drive (30a) for operating in the hydronic pump system (30b).

3. The automatic self-driving pump system according to claim 2, wherein the controller (40) comprises a pump motor drive detector (30h) configured to

   receive the signature chip or barcode signaling, and
   provide pump motor drive detector signaling that contains information about the parameters, based upon the signature chip or barcode signaling received.

4. The automatic self-driving pump system according to one of the preceding claims, wherein the parameters include some combination of power, voltage, phase, RPM, impeller size, and pump curve data.

5. The automatic self-driving pump system according to claim 3, wherein the pump motor drive detector (30h) is configured to search a database (30i) for the parameters, based upon the signature chip or barcode signaling received.

6. The automatic self-driving pump system according to claim 5, wherein the database (30i) is a pump motor drive database or a cloud-based database.

7. The automatic self-driving pump system according to one of the preceding claims, wherein the automatic self-driving module signaling includes information about the speed (n) of the pump drive (30a).

8. The automatic self-driving pump system according to one of the preceding claims, wherein the automatic self-driving pump system comprises a data transmitter (30d) configured to

   receive the automatic self-driving signaling and transmit the automatic self-driving signaling to the pump drive (30a), and
   receive the pressure and flow signaling, and provide the pressure and flow signaling to the automatic self-driving module (30e).

9. The automatic self-driving pump system according to one of the preceding claims, wherein the controller (40) comprises an automatic control design setup module (30g) configured to receive the automatic system and flow MAP detector signaling, and provide the control signaling, based upon the automatic system and flow MAP detector signaling received.

10. The automatic self-driving pump system according to one of the preceding claims, wherein the controller (40) is configured to derive or setup the parameters automatically after the pump drive (30a) is started initially.

11. The automatic self-driving pump system according to claim 9, wherein the automatic control design setup module (30g) is configured to determine an adaptive control curve and real time graphic pump characteristics curves and operation parameters automatically.

12. The automatic self-driving pump system according to claim 11, wherein the automatic control design setup module (30g) is configured to determine the adaptive control curve for deriving an adaptive pressure set point of $SP(t)$ based upon following equation (2):

$$SP(t) = \left(\frac{Q(t)}{\bar{Q}_{max}(t)}\right)^{\alpha} \left((\bar{Q}_{max}(t)/\bar{C}_{vmax}(t))^2 - b_0\right) + b_0 \qquad (2)$$

   where $b_0$ is the minimum pressure at no flow, $\alpha$ is a control curve setting parameter varying as $1 \leq \alpha \leq 2$ defined in between a linear curve and a quadratic one.

13. The automatic self-driving pump system according to claim 12, wherein the controller (40) is configured to setup automatically all associated parameters in Eq. 2 after the pump drive (30a) is started initially.

14. The automatic self-driving pump system according to claim 2 or 3, wherein

the signature chip or barcode signaling is stored in and sensed from a signature chip or barcode installed that can be scanned into the controller (40) automatically, including by means of a scanner or

the automatic self-driving pump system comprises the pump drive (30a) configured to receive the control signaling and operate in the hydronic pump system (30b).

15. A method for operating an automatic self-driving pump system, comprising:

receiving, with a sensorless converter or with sensors, in a controller (40) having a signal processor (40a), sensed signaling that contains information about parameters for automatic pump control design, initial setup and run to control a pump drive (30a) for operating in a hydronic pump system (30b), and

providing, from the controller (40), control signaling that contains information to control the pump drive (30a) for an initial startup configuration and subsequent operation in the hydronic pump system (30b) after the initial startup, based upon the signaling received; and

configuring the controller (40) with

an automatic self-driving module (30e) that receives the control signaling and pressure and flow signaling that contains information about the pressure (P) and flow (Q) of the pump drive, and provides automatic self-driving module signaling that contains information to control the pump drive for the initial startup configuration and subsequent operation in the hydronic pump system (30b) after initial startup, and

an automatic system and flow moving average peak (MAP) detector (30f) that receives the pressure and flow signaling, and provides automatic system and flow MAP detector signaling based upon a moving average peak (MAP) determined; and

the MAP being determined and defined as following:

$$\bar{C}_{vmax}(t) = \begin{cases} MAP(C_v(t)), & C_v < \bar{C}_{vmax} \\ C_v(t), & C_v \geq \bar{C}_{vmax} \end{cases} \qquad (1.1)$$

$$\bar{Q}_{max}(t) = \begin{cases} MAP(Q(t)), & Q < \bar{Q}_{max} \\ Q(t), & Q \geq \bar{Q}_{max} \end{cases} \qquad (1.2)$$

where the *MAP* function is a moving average peak detector (30f), $C_v$ is a system dynamic friction coefficient derived by a system flow equation of $C_v = Q/\sqrt{\Delta P}$, where $\Delta P$ is differential pressure of pump, $\bar{C}_{vmax}$ represents the MAP of $C_v$.

**Patentansprüche**

1. Ein automatisches, selbstfahrendes Pumpensystem, umfassend:

ein Steuergerät (40) mit einem Signalprozessor (40a), das ausgebildet ist,

erfasste Signale zu empfangen, die mit einem sensorlosen Wandler oder mit Sensoren erhalten wurden und die Informationen über Parameter für Entwurf, Ersteinrichtung und Betrieb einer automatischen Pumpensteuerung enthalten, um einen Pumpenantrieb (30a) für den Betrieb in einem hydronischen Pumpensystem (30b) zu steuern, und

basierend auf den empfangenen erfassten Signalen Steuersignale bereitzustellen, die Informationen zur Steuerung des Pumpenantriebs (30a) für eine anfängliche Startkonfiguration und den anschließenden Betrieb in dem hydronischen Pumpensystem (30b) nach dem anfänglichen Start enthalten;

**dadurch gekennzeichnet, dass** das Steuergerät (40) umfasst:

ein automatisches selbstfahrendes Modul (30e), das ausgebildet ist, die Steuersignale und Signale für Druck und Durchfluss zu empfangen, die Informationen über den Druck (P) und den Durchfluss (Q) des Pumpenantriebs (30a) enthalten, und automatische selbstfahrende Modulsignale bereitzustellen, die Informationen zur Steuerung des Pumpenantriebs (30a) für die anfängliche Startkonfiguration und den anschließenden Betrieb in dem hydronischen Pumpsystem (30b) nach dem anfänglichen Start enthalten; und

einen automatischen System- und Durchfluss- gleitenden Durchschnittsspitzen (MAP) Detektor (30f), der ausgebildet ist,

die Signale für Druck und Durchfluss zu empfangen, und

auf der Grundlage von ermittelten gleitenden Durchschnittsspitzen (MAP) automatische System- und Durchfluss-MAP-Detektor-Signale bereitzustellen;

wobei der MAP wie folgt ermittelt und definiert wird:

$$\bar{C}_{vmax}(t) = \begin{cases} MAP(C_v(t)), & C_v < \bar{C}_{vmax} \\ C_v(t), & C_v \geq \bar{C}_{vmax} \end{cases} \qquad (1.1)$$

$$\bar{Q}_{max}(t) = \begin{cases} MAP(Q(t)), & Q < \bar{Q}_{max} \\ Q(t), & Q \geq \bar{Q}_{max} \end{cases} \qquad (1.2)$$

wobei die MAP-Funktion ein gleitender Durchschnittsspitzen-Detektor (30f) ist, $C_v$ ein dynamischer Systemreibungskoeffizient ist, der durch eine Systemdurchflussgleichung von $C_v = Q/\sqrt{\Delta P}$ abgeleitet wird, wobei $\Delta P$ ein Differenzdruck der Pumpe ist, $\bar{C}_{vmax}$ den MAP von $C_v$ darstellt.

**2.** Das automatische selbstfahrende Pumpensystem nach Anspruch 1, wobei die erfassten Signale Signaturchip- oder Barcode-Signale umfassen, die Informationen über den Pumpenantrieb (30a) für den Betrieb in dem hydronischen Pumpensystem (30b) enthalten.

**3.** Das automatische selbstfahrende Pumpensystem nach Anspruch 2, wobei das Steuergerät (40) einen Pumpenmotorantriebsdetektor (30h) umfasst, der ausgebildet ist,

die Signaturchip- oder Barcode-Signale zu empfangen und
auf der Grundlage der empfangenen Signaturchip- oder Barcode-Signale Pumpenmotorantriebsdetektor-Signale bereitzustellen, die Informationen über die Parameter enthalten.

**4.** Das automatische selbstfahrende Pumpensystem nach einem der vorhergehenden Ansprüche, wobei die Parameter eine beliebige Kombination aus Leistung, Spannung, Phase, Drehzahl, Laufradgröße und Pumpenkurvendaten umfassen.

**5.** Das automatische selbstfahrende Pumpensystem nach Anspruch 3, wobei der Pumpenmotorantriebsdetektor (30h) ausgebildet ist, eine Datenbank (30i) auf der Grundlage der empfangenen Signaturchip- oder Barcode-Signale nach den Parametern zu durchsuchen.

**6.** Das automatische selbstfahrende Pumpensystem nach Anspruch 5, wobei die Datenbank (30i) eine Pumpenmotorantriebsdatenbank oder eine cloudbasierte Datenbank ist.

**7.** Das automatische selbstfahrende Pumpensystem nach einem der vorhergehenden Ansprüche, wobei die automatischen selbstfahrenden Modulsignale Informationen über die Geschwindigkeit (n) des Pumpenantriebs (30a) umfassen.

**8.** Das automatische selbstfahrende Pumpensystem nach einem der vorhergehenden Ansprüche, wobei das automatische selbstfahrende Pumpensystem einen Datentransmitter (30d) umfasst, der ausgebildet ist,

die automatischen selbstfahrenden Signale zu empfangen und die automatischen selbstfahrenden Signale an den Pumpenantrieb (30a) zu senden, und
die Signale für Druck und Durchfluss zu empfangen und die Signale für Druck und Durchfluss dem automatischen selbstfahrenden Modul (30e) bereitzustellen.

9. Das automatische selbstfahrende Pumpensystem nach einem der vorhergehenden Ansprüche, wobei das Steuergerät (40) ein automatisches Steuerungsentwurfs-/Einrichtungsmodul (30g) umfasst, das ausgebildet ist, die automatischen System- und Durchfluss-MAP-Detektor-Signale zu empfangen und auf der Grundlage der empfangenen automatischen System- und Durchfluss-MAP-Detektor-Signale die Steuersignale bereitzustellen.

10. Das automatische selbstfahrende Pumpensystem nach einem der vorhergehenden Ansprüche, wobei das Steuergerät (40) ausgebildet ist, die Parameter automatisch abzuleiten oder einzurichten, nachdem der Pumpenantrieb (30a) anfänglich gestartet wurde.

11. Das automatische selbstfahrende Pumpensystem nach Anspruch 9, wobei das automatische Steuerungsentwurfs-/Einrichtungsmodul (30g) ausgebildet ist, eine adaptive Steuerkurve und grafische Echtzeit-Pumpenkennlinien und Betriebsparameter automatisch zu bestimmen.

12. Das automatische selbstfahrende Pumpensystem nach Anspruch 11, wobei das automatische Steuerungsentwurfs-/Einrichtungsmodul (30g) ausgebildet ist, die adaptive Steuerkurve zur Ableitung eines adaptiven Drucksollwerts $SP(t)$ auf der Grundlage der folgenden Gleichung (2) zu bestimmen:

$$SP(t) = \left(\frac{Q(t)}{\bar{Q}_{max}(t)}\right)^{\alpha}((\bar{Q}_{max}(t)/\bar{C}_{vmax}(t))^2 - b_0) + b_0 \qquad (2)$$

wobei $b_0$ der minimale Druck bei fehlendem Durchfluss ist, $\alpha$ ein Einstellparameter der Steuerkurve ist, der zwischen $1 \leq \alpha \leq 2$ variiert und zwischen einer linearen und einer quadratischen Kurve definiert ist.

13. Das automatische selbstfahrende Pumpensystem nach Anspruch 12, wobei das Steuergerät (40) ausgebildet ist, alle zugehörigen Parameter in Gl. (2) automatisch einzustellen, nachdem der Pumpenantrieb (30a) anfänglich gestartet wurde.

14. Das automatische selbstfahrende Pumpensystem nach Anspruch 2 oder 3, wobei

die Signaturchip- oder Barcode-Signale in einem installierten Signaturchip oder Barcode gespeichert sind und aus diesem erfasst werden, der automatisch, auch mittels eines Scanners, in das Steuergerät (40) ausgelesen werden kann, oder
das automatische selbstfahrende Pumpensystem den Pumpenantrieb (30a) umfasst, der ausgebildet ist, die Steuersignale zu empfangen und in dem hydronischen Pumpensystem (30b) zu arbeiten.

15. Verfahren zum Betreiben eines automatischen selbstfahrenden Pumpensystems, umfassend:

mit einem sensorlosen Konverter oder mit Sensoren, in einem Steuergerät (40) mit einem Signalprozessor (40a), Empfangen, von erfassten Signalen, die Informationen über Parameter für Entwurf, Ersteinrichtung und Betrieb der automatischen Pumpensteuerung enthalten, um einen Pumpenantrieb (30a) für den Betrieb in einem hydronischen Pumpensystem (30b) zu steuern, und
von dem Steuergerät (40) auf der Grundlage der empfangenen Signale Bereitstellen von Steuersignalen, die Informationen zur Steuerung des Pumpenantriebs (30a) für eine anfängliche Startkonfiguration und den anschließenden Betrieb in dem hydronischen Pumpensystem (30b) nach dem anfänglichen Start enthalten; und
Konfigurieren des Steuergeräts (40) mit

einem automatischen selbstfahrenden Modul (30e), das die Steuersignale und Signale für Druck und Durchfluss empfängt, die Informationen über den Druck (P) und den Durchfluss (Q) des Pumpenantriebs enthalten, und automatische selbstfahrende Modulsignale bereitstellt, die Informationen zur Steuerung des Pumpenantriebs für die anfängliche Startkonfiguration und den anschließenden Betrieb in dem hydronischen Pumpensystem (30b) nach dem anfänglichen Start enthalten, und
einem automatischen System- und Durchfluss-MAP-Detektor (30f), der die Signale für Druck und Durchfluss empfängt und auf der Grundlage von ermittelten gleitenden Durchschnittsspitzen (MAP) automatische System- und Durchfluss-MAP-Detektor-Signale bereitstellt; und

wobei der MAP wie folgt ermittelt und definiert wird:

$$\bar{C}_{vmax}(t) = \begin{cases} MAP(C_v(t)), & C_v < \bar{C}_{vmax} \\ C_v(t), & C_v \geq \bar{C}_{vmax} \end{cases} \qquad (1.1)$$

$$\bar{Q}_{max}(t) = \begin{cases} MAP(Q(t)), & Q < \bar{Q}_{max} \\ Q(t), & Q \geq \bar{Q}_{max} \end{cases} \qquad (1.2)$$

wobei die MAP-Funktion ein gleitender Durchschnittsspitzen-Detektor (30f) ist, $C_v$ ein dynamischer Systemreibungskoeffizient ist, der durch eine Systemdurchflussgleichung von $C_v = Q/\sqrt{\Delta P}$ abgeleitet wird, wobei $\Delta P$ ein Differenzdruck der Pumpe ist, $\bar{C}_{vmax}$ den MAP von $C_v$ darstellt.

## Revendications

1. Un système de pompe à auto-entraînement automatique, comprenant :

   un contrôleur (40) doté d'un processeur de signaux (40a) configuré pour
   recevoir des signaux détectés qui sont obtenus avec un convertisseur sans capteur ou avec des capteurs et qui contiennent des informations sur les paramètres pour la conception , la configuration initiale et le fonctionnement de la commande automatique de pompes pour commander un entraînement de pompe (30a) pour fonctionner dans un système de pompe hydronique (30b), et
   fournir des signaux de commande qui contient des informations pour commander l'entraînement de pompe (30a) pour une configuration de démarrage initial et un fonctionnement ultérieur dans le système de pompe hydronique (30b) après le démarrage initial, sur la base des signaux détectés reçus ;
   **caractérisé par le fait que** le contrôleur (40) comprend :

   un module d'autopilotage automatique (30e) configuré pour recevoir les signaux de commande et des signaux de pression et de débit qui contient des informations sur la pression (P) et le débit (Q) de l'entraînement de pompe (30a), et fournir des signaux de module d'autopilotage automatique qui contient des informations pour commander l'entraînement de la pompe (30a) pour la configuration de démarrage initial et le fonctionnement ultérieur dans le système de pompe hydronique (30b) après le démarrage initial ; et
   un système automatique et un détecteur de pic de moyenne mobile (MAP) de débit (30f) configuré pour

   recevoir les signaux de pression et de débit, et
   fournir des signaux de système automatique et détecteur MAP de débit basé sur un pic de moyenne mobile (MAP) déterminé ;

   le MAP étant déterminée et définie comme suit :

$$\bar{C}_{vmax}(t) = \begin{cases} MAP(C_v(t)), & C_v < \bar{C}_{vmax} \\ C_v(t), & C_v \geq \bar{C}_{vmax} \end{cases} \qquad (1.1)$$

$$\bar{Q}_{max}(t) = \begin{cases} MAP(Q(t)), & Q < \bar{Q}_{max} \\ Q(t), & Q \geq \bar{Q}_{max} \end{cases} \qquad (1.2)$$

   où la fonction *MAP* est un détecteur de pic de moyenne mobile (30f), $C_v$ est un coefficient de frottement dynamique du système dérivé d'une équation de débit du système de $C_v = Q/\sqrt{\Delta P}$, où $\Delta P$ est la pression différentielle de la pompe, $\bar{C}_{vmax}$ représente le MAP de $C_v$.

2. Le système de pompe à auto-entraînement automatique selon la revendication 1, dans lequel les signaux détectés reçus comprennent des signaux de la puce de signature ou du code-barres qui contient des informations sur l'entraînement de la pompe (30a) pour fonctionner dans le système de pompe hydronique (30b).

3. Le système de pompe à auto-entraînement automatique selon la revendication 2, dans lequel le contrôleur (40) comprend un détecteur d'entraînement de moteur de pompe (30h) configuré pour

recevoir les signaux de la puce de signature ou du code-barres, et
fournir des signaux de détecteur d'entraînement de moteur de pompe qui contient des informations sur les paramètres, sur la base des signaux de puce de signature ou de code-barres reçus.

4. Le système de pompe à auto-entraînement automatique selon l'une des revendications précédentes, dans lequel les paramètres comprennent une combinaison quelconque de puissance, de tension, de phase, de vitesse de rotation, de taille de roue et de données de courbe de pompe.

5. Le système de pompe à auto-entraînement automatique selon la revendication 3, dans lequel le détecteur d'entraînement de moteur de pompe (30h) est configuré pour rechercher les paramètres dans une base de données (30i), sur la base des signaux de la puce de signature ou du code-barres reçus.

6. Le système de pompe à auto-entraînement automatique selon la revendication 5, dans lequel la base de données (30i) est une base de données d'entraînement de moteur de pompe ou une base de données basée sur le nuage.

7. Le système de pompe à auto-entraînement automatique selon l'une des revendications précédentes, dans lequel les signaux de module d'autopilotage automatique comprend des informations sur la vitesse (n) de l'entraînement de la pompe (30a).

8. Le système de pompe à auto-entraînement automatique selon l'une des revendications précédentes, dans lequel le système de pompe à auto-entraînement automatique comprend un transmetteur de données (30d) configuré pour

recevoir les signaux d'autopilotage automatique et transmettre les signaux d'autopilotage automatique à l'entraînement de la pompe (30a), et
recevoir les signaux de pression et de débit et fournir les signaux de pression et de débit au module d'autopilotage automatique (30e).

9. Le système de pompe à auto-entraînement automatique selon l'une des revendications précédentes, dans lequel le contrôleur (40) comprend un module de configuration de conception de contrôle automatique (30g) configuré pour recevoir les signaux de système automatique et détecteur MAP de débit, et fournir les signaux de commande, basé sur les signaux de système automatique et détecteur MAP de débit reçus.

10. Le système de pompe à auto-entraînement automatique selon l'une des revendications précédentes, dans lequel le contrôleur (40) est configuré pour dériver ou configurer les paramètres automatiquement après le démarrage initial de l'entraînement de la pompe (30a).

11. Le système de pompe à auto-entraînement automatique selon la revendication 9, dans lequel le module de configuration de conception de contrôle automatique (30g) est configuré pour déterminer automatiquement une courbe de commande adaptative et des courbes graphiques en temps réel des caractéristiques de la pompe et des paramètres de fonctionnement.

12. Le système de pompe à auto-entraînement automatique selon la revendication 11, dans lequel le module de configuration de conception de contrôle automatique (30g) est configuré pour déterminer la courbe de commande adaptative pour dériver un point de consigne de pression adaptatif sur la base de l'équation suivante (2) :

$$SP(t) = \left(\frac{Q(t)}{\bar{Q}_{max}(t)}\right)^{\alpha} \left((\bar{Q}_{max}(t)/\bar{C}_{vmax}(t))^2 - b_0\right) + b_0 \qquad (2)$$

où $b_0$ est la pression minimale à débit nul, $\alpha$ est un paramètre de contrôle de la courbe de commande variant comme $1 \leq \alpha \leq 2$ défini entre une courbe linéaire et une courbe quadratique.

13. Le système de pompe à auto-entraînement automatique selon la revendication 12, dans lequel le contrôleur (40) est configuré pour configurer automatiquement tous les paramètres associés dans l'équation (2) après le démarrage initial de l'entraînement de la pompe (30a).

**14.** Le système de pompe à auto-entraînement automatique selon la revendication 2 ou 3, dans lequel

les signaux de la puce de signature ou du code-barres sont stockées et lues d'une puce de signature ou d'un code-barres installé qui peut être scanné automatiquement dans le contrôleur (40), y compris au moyen d'un scanner, ou
le système de pompe à auto-entraînement automatique comprend l'entraînement de la pompe (30a) configuré pour recevoir les signaux de commande et fonctionner dans le système de pompe hydronique (30b).

**15.** Méthode de fonctionnement d'un système de pompe à auto-entraînement automatique, comprenant :

recevoir, à l'aide d'un convertisseur sans capteur ou de capteurs, dans un contrôleur (40) doté d'un processeur de signaux (40a), des signaux détecté qui contient des informations sur les paramètres de conception, de configuration initiale et de fonctionnement de la commande automatique de la pompe pour contrôler un entraînement de pompe (30a) fonctionnant dans un système de pompe hydronique (30b), et
fournir, du contrôleur (40), des signaux de commande qui contient des informations pour commander l'entraînement de la pompe (30a) pour une configuration de démarrage initiale et un fonctionnement ultérieur dans le système de pompe hydronique (30b) après le démarrage initial, sur la base des signaux reçus ; et
configurer le contrôleur (40) avec

un module d'autopilotage automatique (30e) qui reçoit les signaux de commande et des signaux de pression et de débit contenant des informations sur la pression (P) et le débit (Q) de l'entraînement de la pompe, et fournit des signaux de module d'autopilotage automatique contenant des informations pour commander l'entraînement de la pompe pour la configuration de démarrage initiale et le fonctionnement ultérieur dans le système de pompe hydronique (30b) après le démarrage initial, et
un système automatique et un détecteur de pic de moyenne mobile (MAP) de débit (30f) qui reçoit les signaux de pression et de débit, et fournit des signaux de détecteur MAP automatique de système et de débit basé sur un pic de moyenne mobile (MAP) déterminé ; et

le MAP étant déterminée et définie comme suit :

$$\bar{C}_{vmax}(t) = \begin{cases} MAP(C_v(t)), & C_v < \bar{C}_{vmax} \\ C_v(t), & C_v \geq \bar{C}_{vmax} \end{cases} \qquad (1.1)$$

$$\bar{Q}_{max}(t) = \begin{cases} MAP(Q(t)), & Q < \bar{Q}_{max} \\ Q(t), & Q \geq \bar{Q}_{max} \end{cases} \qquad (1.2)$$

où la fonction *MAP* est un détecteur de pic de moyenne mobile (30f), $C_v$ est un coefficient de frottement dynamique du système dérivé d'une équation de débit du système de $C_v = Q/\sqrt{\Delta P}$, où $\Delta P$ est la pression différentielle de la pompe, $\overline{C}_{vmax}$ représente le MAP de $C_v$.

**FIG. 1A**

**FIG. 1B**

*FIG. 1* : Variable speed pump controls with advanced
energy saving and sensorless control technologies.

**FIG. 2A** : Remote control configuration

**FIG. 2** : ASD-pumps integrated with a pumping control of
a) remotely in a computer or b) locally attached.

EP 3 513 074 B1

**Sensorless**
- DB Numeric
- #D Testing Data    20g

**Monitoring & Cntrl**
- Vibration Monitoring
- Power Monitoring    20f

**Energy Saving Cntrl**
- System
- Flow Adaptive    20h

**Touch Screen**
- Real Time Curves
- Control Design Tools    20i

20c

20d

20b

20a

**Communications**
- Web access
- Smartphone
- BMS & Drive Comm.    20j

**Basic Functionalities**    20e
- Multiple Pumps, Zones, Sensors
- Pump Staging, Alternation, ...
- Alarms, Log, ...

**Languages**
- English
- Chinese
- Up to 22 Languages    20k

*FIG. 2B* : Locally attached control configuration

*FIG. 2* : ASD-pumps integrated with a pumping control of
a) remotely in a computer or b) locally attached.

EP 3 513 074 B1

30

Sensors Converter — 30c

30f

System — 30b

Auto System & Flow MAP Detector

30a

30e

Pump/ Drive

Auto Self-driving Module

SP

Auto Control Design/Setup Module — 30g

P, Q

n

Data Transmitter

Pump/Motor/Drive Detector — 30h

30d

iCloud /Database — 30i

*FIG. 3* : ASD-pumps functional model.

*FIG. 4* : An ASD-pumps prototype with a touch screen pumping control system.

23

A control or controller 40 for a module or device 10b, 20b 30c, 30d, 30e, 30f, 30g, 30h or 30i in Figures 2 and 3 that forms part of an automatic self-driving pump system

A signal processor or processing module 40a configured at least to:

receive signaling containing information for performing or implementing signal processing functionality associated with at least one of the modules or devices 10b, 20b, 30c, 30d, 30e, 30f, 30g, 30h or 30i in Figure 2 and 3;

determine corresponding signaling containing information for providing from the modules or devices 10b, 20b, 30c, 30d, 30e, 30f, 30g, 30h or 30i in Figures 2 and 3 in order to implement the signal processing functionality, based upon the signaling received; and/or

provide the corresponding signaling as control and/or design signaling from the modules or devices 10b, 20b, 30c, 30d, 30e, 30f, 30g, 30h or 30i in Figures 2 and 3 to implement the signal processing functionality in the automatic self-driving pump system.

Other signal processor circuits or components 40b that do not form part of the underlying invention, e.g., including input/output modules, one or more memory modules, data, address and control busing architecture, etc.

*FIG. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62393312
- WO 0057063 A
- US 982286, Andrew Cheng and James Gu
- US 8700221 B
- US 717086, Andrew Cheng, James Gu and Graham Scott
- US 20140005841 A1
- US 61576737 B
- US 091795, Andrew Cheng, James Gu, Graham Scott
- US 20140249682 A1
- US 61771375 B
- US 14187817 B, Andrew Cheng, James Gu and Graham Scott
- US 20140288716 A1
- US 61803258 B
- US 14339594 B, Andrew Cheng, James Gu and Graham Scott
- US 20150032271 A1
- US 61858237 B
- US 14680667 B, Andrew Cheng, James Gu and Graham Scott
- US 20160010639 A1
- US 61976749 B
- US 14730871 B, Andrew Cheng, James Gu and Graham Scott
- US 20160017889 A1
- US 62007474 B
- US 14969723 B, Andrew Cheng and James Gu
- US 20160186889 A1
- US 62091965 B
- US 15044670 B, Andrew Cheng and James Gu
- US 20160246290 A1
- US 62116031 B
- US 15173781 B, Andrew Cheng, James Gu and Kyle Schoenheit
- US 20160356276 A1
- US 62170977 B
- US 217070, Andrew Cheng, James Gu and Kyle Schoenheit
- US 20170107992 A1
- US 62196355 B
- US 20120173027 A1
- US 61576737
- US 680667
- US 730871
- US 969723
- US 62091965
- US 04467016
- US 62116031